# EUROPEAN PATENT APPLICATION

(11) **EP 2 228 236 A1**
(43) Date of publication of application: **15.09.2010**
(21) Application number: 08855736.8
(22) Date of filing: 07.10.2008
(51) Int. Cl.: B60C 9/06, B60C 5/00, B60C 5/14

(54) **PNEUMATIC TIRE FOR MOTOCROSS**

(30) Priority: 26.11.2007 JP 2007304739
(71) Applicant: Sumitomo Rubber Industries, Ltd., Kobe-shi, Hyogo 651-0072 (JP)
(72) Inventor: NODA, Soji, Kobe-shi Hyogo 651-0072 (JP)
(74) Representative: Manitz, Finsterwald & Partner GbR
(86) International application number: PCT/JP2008/068239
(87) International publication number: WO 2009/069386

(57) **Abstract**

Deformation of a shoulder portion at the time of jumping and landing is suppressed, and acceleration after landing is improved. A pneumatic tire for motocross comprises a pair of rubber reinforcing layers 10 attached to an interior surface 9i of an inner liner rubber 9 and extending in the circumferential direction of the tire in shoulder regions sh in both sides of the tire equator. The above-mentioned rubber reinforcing layer 10 is substantially crescent in cross section reducing gradually in thickness outwardly and inwardly in the radial direction of the tire from a maximum thick-walled portion 10m having a maximum thickness wm of 1.0 to 3.5 mm. And, the rubber reinforcing layer 10 has a complex elastic modulus E* of 10 to 80 MPa

## Description

### TECHNICAL FIELD

The present invention relates to a pneumatic tire for motocross that is capable of improving acceleration after jumping and landing without deteriorating driving stability.

### BACKGROUND OF THE INVENTION

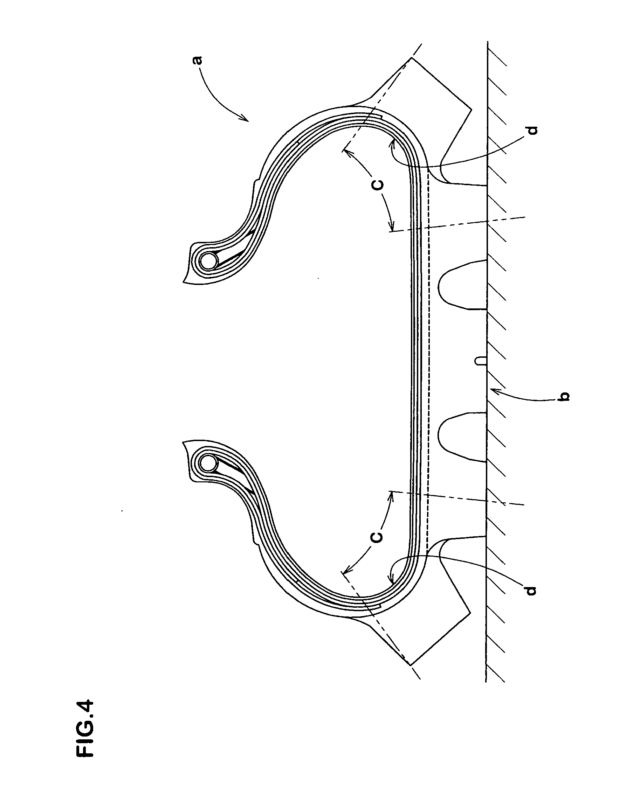

A pneumatic tire for motocross mounted on a motocross motorcycle is used in harsh conditions such as a high speed driving on a bad road, a frequent jumping and landing and the like. At a time of jumping, the tire may experience a force of about 2 to 3 times a vehicle weight. Fig. 4 shows a cross-sectional view of a conventional pneumatic tire for motocross after jumping and landing, for example. As shown in Fig. 4, the tire (a) bends so much that a shoulder region (c) of a tread portion (b) may contact the ground at the time of jumping and landing. In such a tire in straight running, the above-mentioned shoulder region (c) does not contact with a road surface.

This produces a large compression strain in an inner liner rubber (d) di sposed on an inner side of the shoulder region (c). Recovery of such a large strain in the shoulder region (c) takes some time, and the motocross bike cannot accelerate sufficiently during the recovery. Therefore, it is necessary to improve the acceleration after such a landing in order to shorten a lap time.

To suppress a large bending deformation in the shoulder region after jumping and landing, a high hardness rubber could be used for a tread rubber. However, the tread portion of such a tire cannot flexibly follow to an unevenness of a road surface while substanti ally flat off-road running. Then, there are problems in deterioration of driving stability such that the tire is liable to jump up.

The following is Patent document 1 as conventional art documents concerting a pneumatic tire for motocross:
Patent Document 1: Japanese Unexamined Patent Application Publication No. H2-225102.

### DISCLOSURE OF THE INVENTION

### PROBLEMS TO BE SOLVED BY THE INVENTION

In view of the above cases, it is an object of the present invention to provide a pneumatic tire for motocross that is capable of improving acceleration after jumping and landing without deteriorating driving stability, basing on comprising a pair of rubber reinforcing layers disposed on an interior surface of the inner liner rubber and extending in the circumferential direction of the tire in shoulder regions in both sides of the ti re equator and basing on limiting a thickness and a complex elastic modul us of the rubber reinforcing layer within a certain definite range, respectively.

### MEANS FOR SOLVING THE PROBLEM

The present invention concerns a pneumatic tire for motocross comprising a troidal carcass extending from a tread portion to bead portions through sidewall portions, and an inner liner rubber disposed on an inner side of this carcass, **characterized in that** the pneumatic tire comprises a pair of rubber reinforcing layers attached to an interior surface of the above-mentioned inner liner rubber and extending in the circumferential direction of the tire in shoulder regions in both sides of the tire equator; the above-mentioned rubber reinforcing layer is substantially crescent in cross section reducing gradually in thickness outwardly and inwardly in the radial direction of the tire from a maximum thick-walled portion having a maximum thickness wm of 1.0 to 3.5 mm; and the above-mentioned rubber reinforcing layer has a complex elastic modulus E* of 10 to 80 MPa.

The present specification, dimensions of each part of the tire are values specified under a standard state, that is to say, under a standard state of the tire mounted on a standard rim inflated to a standard pressure and loaded with no load, unless otherwise noted.

Here, the "standard rim" is a rim determined for each tire by a standard including one on which the ti re is based, and the standard rim is a standard rim in the case of JATMA, a "Design Rim" in the case of TRA, and a "Measuring Rim" in the case of ETRTO. Further, "standard internal pressure" means an air pressure determined for each tire by the standard. The "regular internal pressure" is a maximum air pressure in JATMA, a maximum value described in a table "TIRE LOAD LIMITS AT VARIOUS COLD INFLATION PRESSURES" in the case of TRA, and "INFLATION PRESSURE" in the case of ETRTO. However, there are no standards with respect to the above definitions, values suggested by a manufacturer or a maker or tires are adopted.

### EFFECT OF THE INVENTION

A pneumatic tire for motocross according to the present invention comprises a pair of rubber reinforcing layers disposed on an interior surface of an inner liner rubber and extending in the circumferential direction of the tire in shoulder regions. This rubber reinforcing layer prevents effectively compression strain on an inner side of a shoulder region and improves bending rigidity of the shoulder region. The rubber reinforcing layer can recover the strain in the shoulder region with rapidity owing to its elasticity. These produce a synergi sti c effect on the pneumatic tire of the present invention so as to improve acceleration after jumping and landing. And, each of the thickness and the complex elastic modulus of the above-mentioned rubber reinforcing layer is limited within a certain definite range, thereby preventing an excessive increase of the bending rigidity in the tread portion including the shoulder region. Therefore, road following property can be mai ntai ned, and deterioration in driving stability can be prevented.

### BRIEF DESCRIPTION OF THE DRAWINGS

[Fig. 1] Fig. 1 is a cross sectional view of a pneumatic tire for motocross according to the present embodiment.
[Fig. 2] Fig. 2 is a partial enlarged view thereof.

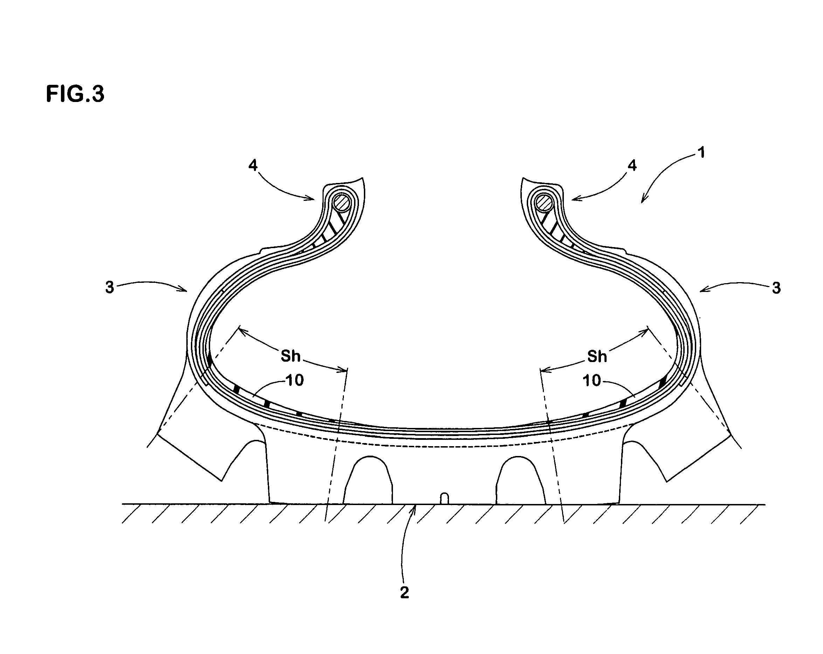

[Fig. 3] Fig. 3 is a cross sectional view showing an example of a state at the time of jumping and landing.
[Fig. 4] Fig. 4 is a cross sectional view showing an example at the time of a conventional pneumatic tire for motocross jumping and landing.

### EXPLANATION OF THE REFERENCE

- 1: Pneumatic tire for motocross
- 2: Tread portion
- 3: Sidewall portion
- 4: Bead portion
- 5: Bead core
- 6: Carcass
- 9: Inner liner rubber
- 9i: Interior surface of inner liner rubber
- 10: Rubber reinforcing layer
- 10m: Maximum thick-walled portion
- 10o: Thin-walled outer end portion
- 10i: Thin-walled inner end portion
- sh: shoulder region
- Wm: Maximum thickness of rubber reinforcing layer

### BEST MODE FOR CARRYING OUT THE INVENTION

Hereinafter, an embodiment of the present invention will now be described on the basis of drawings.

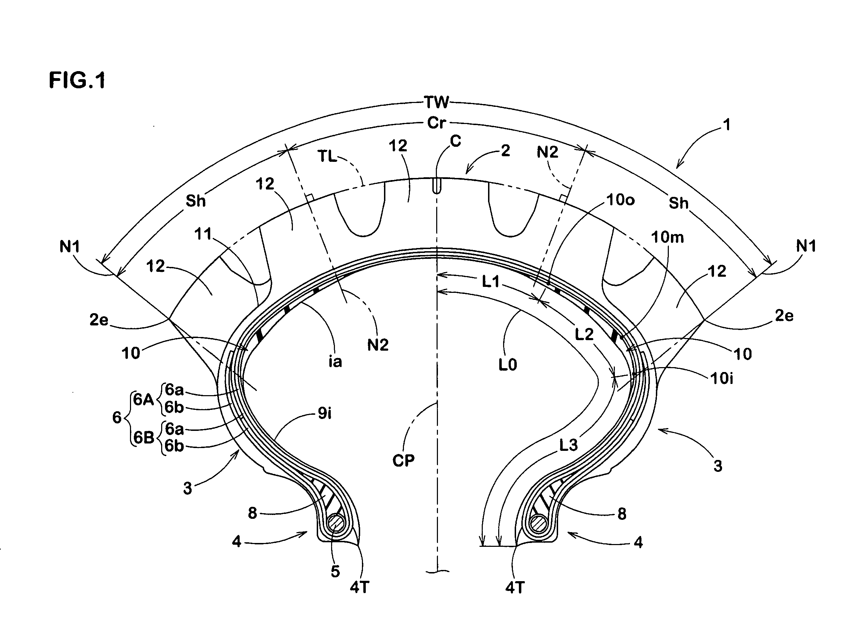

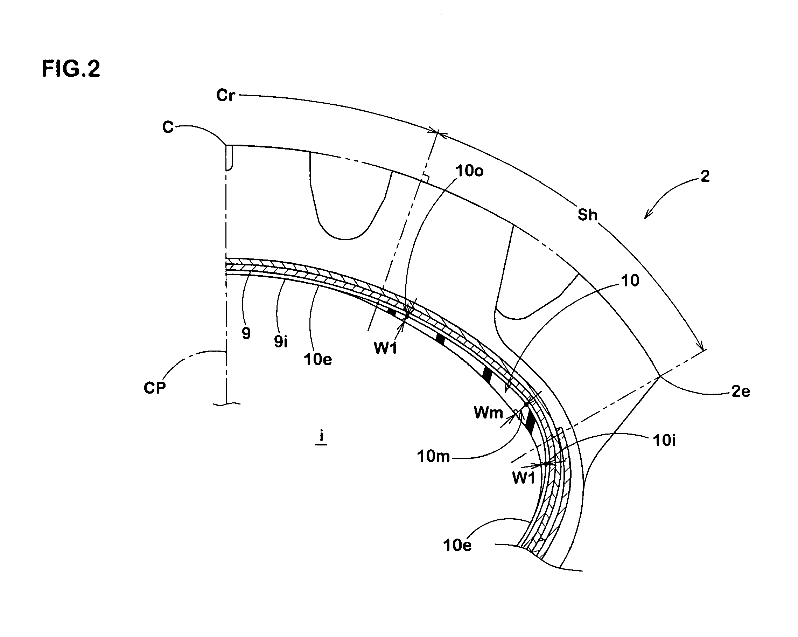

Fig. 1 shows a cross sectional view of a pneumatic ti re for motocross 1 (hereinafter sometimes referred to as " pneumatic fire") in a standard state according to this embodiment of the present invention, and Fig. 2 is a partial enlarged view thereof, respectively. The pneumatic tire for motocross is defined as a pneumatic tire for motocross race of driving on a special course such as off-road hilly areas and slopes with a motorcycle.

A pneumatic tire 1 of the present invention comprises a tread portion 2, a pair of sidewall portions 3 extendi ng from the both end portions thereof inward in the radial direction of the tire, bead potions 4 disposed on an inner end of respective sidewall portions 3 in the radial direction of the tire and mounted on a rim, not-shown in figures. The pneumatic tire 1 is a tubeless tire and comprising a troidal carcass 6 extending from the above-mentioned tread portion 2 to the bead portion 4 through the sidewall portion 3, and an inner liner rubber 9 disposed on an inner side of this carcass 6.

The above-mentioned tread portion 2 has a general shape as a tire for two-wheel vehicle such that the tread portion curves in a convex circular arc toward an outer side in the radial direction of the tire with a comparatively small radius of curvature, and that tread ends 2e, 2e are on outmost sides in the axial direction of the tire. The tread portion 2 is provided with plural blocks 12 comparatively sparsely. Such dispositions of the blocks 12 help to improve ground contact pressure of each of the blocks 12 totally, to improve the blocks in breaking into a road surface of a soft sandy road or a muddy road, and to exert a high driving performance. And, owing to the sparsely disposed arrangement of the blocks, a tread bottom surface 11 having a large area is formed between the blocks 12, 12, and mud clogging between the blocks 12, 12 can be prevented.

Moreover, the above-mentioned block 12 is preferably disposed with a sea land ratio of 10 to 70%. The above-mentioned sea land ratio is expressed as a percent of a land area sl to a sea area ss of the tread portion 2, that is expressed as a percent of a ratio (Sl/Ss). The above-mentioned land area sl is the sum of ground contacting areas of all blocks 12. The sea area ss is a tread area except the above-menti oned land area; specifically, it is obtained by subtracting the above-mentioned land area from a virtual tread surface (TWXCL), which is a product of a tread developed wi dth TW and a tread circumferential length CL on the tire equator (a circumferential length at the outmost diameter of the tire). The tread developed width TW is a length of an arc-shaped curve connecti ng smoothly together between the tread ends 2e, 2e through a ground contacting surface of the block 12 as shown in Fig. 1.

The above-mentioned carcass 6 is comprised of at least one carcass ply, in the present embodiment two carcass plies 6A and 6B overlapping inside and outward in radial direction of the tire, having a main portion 6a extending from the tread portion 2 to bead core 5 in the bead portion 4 through the sidewall portion 3, and a turnup portion 6b turned up around the bead core 5 from inward to outward in the axial direction of the tire. It is preferable that a height of an outer end of the turnup portions 6b of the inner carcass ply 6A differs from that of the outer carcass ply 6B so as to reduce the strain around the outer end.

The carcass 6 of the present embodi ment has a bias construction. That is to say, the carcass cords of each of the carcass plies 6A and 6B are arranged at an angle of 30 to 50 deg. with respect to the tire equator C, for example, and cross each other. However, it will be obvious the carcass 6 has a radial construction. For the above-mentioned carcass cord, as not limited, organic fibers such as nylon, rayon, polyester, aromatic polyamide, and the like are preferably used, for example. Moreover, to improve the bending rigidity of the bead portion 4, there is a bead apex rubber 8 having a substantially triangle shape in cross section and extending from the bead core 5 outward in the radial direction of the tire between the main portion 6a and the turnup portion 6b of the carcass ply.

The above-mentioned inner liner rubber 9 is made of a rubber member with a low breathability such as butyl rubber, halogenated butyl rubber, or the like, for example. And the above-mentioned inner liner rubber 9 of the present embodiment is disposed in an overall of the tire cavity (i) extending in troidal between the bead toes 4T, 4T, which are tips of the bead portions 4, for example.

In the pneumatic tire 1 of the present embodiment, a pair of rubber reinforcing layers 10 attached to an interior surface 9i of the above-mentioned inner liner rubber 9 and extending in the circumferential direction of the tire in shoulder regions Sh in both sides of the tire equator C.

The above-mentioned shoulder region Sh is determined as a region between a tire normal line N1 at a tread end 2e and a tire normal line N2. The tire Normal line N2 is at a position of one third of the tread developed width TW apart from the above-mentioned tread end 2e along the above-mentioned arc-shaped curve TL. And the rubber reinforcing layer 10 is at least partially included in the above-mentioned shoulder region sh. The rubber reinforcing layer 10 of the present embodiment is formed symmetrically with a central focus on the tire equator C.

As shown in Fig. 2, the rubber reinforcing layer 10 is substantially crescent in cross section reducing gradually in thickness outwardly and inwardly in the radial direction of the tire from a maximum thick-walled portion 10m having a maximum thickness wm of 1.0 to 3.5 mm; and the rubber reinforcing layer has a complex elastic modulus E* of 10 to 80 MPa. A thickness of he rubber reinforcing layer 10 is measured in the direction of the normal line to the interior surface 9i of the inner liner rubber.

A conventional pneumatic tire includes a thin inner line rubber 9 and carcass cords in a shoulder region sh, but a cord material has a extremely small compressive stiffness. Then, in the conventional pneumatic tire, a large compressive deformation is produced in the shoulder region sh at the time of jumping and landing, and this causes reduction of acceleration after landing.

However, the pneumatic tire 1 of the present embodiment, since the above-mentioned rubber reinforcing layer 10 is attached to the interior surface 9i of the inner liner rubber 9 in the shoulder regions sh, this can effectively reduce the compressive strain of the shoulder region S on a side of the inner liner rubber 9, and the bending deformation thereof can be suppressed in small measure. And, the strain of the shoulder region sh can be rapidly recovered by elasticity of the rubber reinforcing layer 10. These produce a synergistic effect on the pneumatic tire 1 of the present embodiment in acceleration after jumping and landing.

In the rubber reinforcing rubber layer 10, each of the maximum thickness Wm and the complex elastic modulus E* is limited within a certain definite range so that an excessive ascent of the rigidity of the tread porti on 2 can be prevented. Hence, the tread porti on 2 can flexibly follows to an unevenness of a road surface while flat off-road running, thereby not reducing the driving stability. In this way, the pneumatic tire 1 of the present embodiment is useful to shorten a lap time in a motocross race.

Now, when the maximum thickness wm of the rubber reinforcing layer 10 is less than 1.0 mm, or when the complex elastic modulus E* is less than 10 MPa, the strain of the shoulder region Sh cannot be effectively suppressed at the time of jumping and landing. However, when the above-mentioned maximum thickness wm is larger than 3.5 mm, or when the complex elastic modulus E* is larger than 80 MPa, the rigidity of the shoulder region sh is extremely heighten, thereby deteriorating the road following performance. From the viewpoint of this, the lower limit of the maximum thickness wm of the rubber reinforcing layer 10 is preferably not less than 1.5 mm, the upper limit thereof is preferably not more than 3.0 mm. Similarly, the lower limit of the complex elastic modulus E* of the rubber reinforcing layer 10 is preferably not less than 20 MPa, and the upper limit thereof is not more than 70 MPa.

Meanwhile,in the present specification, the complex elastic modulus E* of the rubber is measured with a viscoelastic spectrometer "VES F-3 model" manufactured by IWAMOTO SEISAKUSHO:KK under a condition of measured temperature of 30 deg. C, frequency of 10 Hz, initial tension of 10%, and dynamic strain of ±2%.

The rubber reinforcing layer 10 of the present embodiment reduces gradually in thickness outwardly and inwardly in the radial direction of the tire from a maximum thick-walled portion 10m, and the thickness becomes zero at each of the end portion 10e thereof. An end portion including such an end portion 10e of the rubber reinforcing layer 10 is too thin to exert substantial reinforcing effect for the shoulder region sh. From various experiments of the inventors, in the rubber reinforcing layer 10, it was founded that it was at most a portion having a thickness of not less than one third of the maximum thickness wm of the rubber reinforcing layer 10 to exert a beneficial effect in reinforcement.

Therefore, it is effective in reinforcing the shoulder region sh more to set not the position of the above-mentioned end portion 10e but each of the positions of a thin-walled outer end portion 10o and a thin-walled inner end portion 10i, in which the width w1 is one third of the maximum thickness wm on both of the radially outer side and the inner side of the maximum thick-walled portion 10m of the rubber reinforcing layer 10, within the certain definite range.

specifically, the length L1 between the thin-walled outer end portion 10o and the tire equator surface (a flat surface including the tire equator C) CP along the interior surface 9i of the inner liner rubber is preferably not less than 0.10 times and not more than 0.34 times the half length L0 of the tire cavity between the tire equator surface CP and the bead toe 4T along the interior surface 9i of inner liner rubber.

If the above-mentioned length L1 is less than 0.10 times the half length L0 of the tire cavity, the rubber reinforcing layer 10 extends nears the tire equator C; therefore, it may cause the driving stability to decrease because of deterioration of the following performance to the unevenness of a road surface while flat off-road running. However, the above-mentioned length L1 is over 0.34 times the half length L0 of the tire cavity, the rubber reinforcing layer 10 cannot reinforce the shoulder region sh sufficiently, and the strain at the time of jumping and landing could not be suppressed sufficiently. From this point of view, the lower limit of the above-mentioned length L1 is preferably not less than 0.12 times, and the upper limit thereof is preferably not more than 0.32 times the half length L0 of the tire cavity.

The length L3 between the thin-walled inner end portion 10i and the bead toe 4T along the interior surface 9i of the inner liner rubber is preferably not less than 0.10 and not more than 0.50 times the half length L0 of the tire cavity. If the above-mentioned length L3 is less than 0.10 times the half length L0 of the tire cavity, the rubber reinforcing layer 10 extends near the bead toe 4T; therefore, it may cause the rigidity of the side wall portion 3 to extremely heighten and the road following performance to deteriorate. If the above-mentioned length L3 is over 0.50 ti mes the half length L0 of the tire cavity, it may cause the rei nforci ng effect on the shoulder region sh to deteriorate and the strain at the time of jumping and landing to suppress insufficiently. Based on this standpoint, the lower limit of the above-mentioned length L3 is preferably not less than 0.15 times, and the upper limit is preferably not more than 0.45 times the half length L0 of the tire cavity.

Moreover, the length L2 of the rubber reinforcing layer between the thin-walled outer end portion 10o and the thin-walled inner end portion 10i along the interior surface of the inner liner rubber is not less than 0.25 times and not more than 0.67 times the above-mentioned half length L0 of the tire cavity. If the above-mentioned length L2 of the rubber reinforcing layer is less than 0.25 times the half length L0 of the tire cavity, the reinforcing effect on the shoulder region sh is liable to decrease; and if it is over 0.67 times the half length L0 of the tire cavity, it may cause the road following performance to deteriorate. From the perspective, the lower limit of the above-mentioned length L2 of the rubber reinforcing layer is more preferably not less than 0.30 times, and the upper limit thereof is more preferably not more than 0.55 times the half length L0 of the tire cavity.

Hereinbefore, an especially preferred embodiment of the present invention was described, but it will be obvious that various changes may be made without limitation to what was shown in the embodiment of the drawings.

### EMBODIMENTS

Plural kinds of test pneumatic tires for motocross of size 120/80-19 each having a basic structure shown in Fig. 1 and specifications shown in Table 1 were made and tested for the performances, compositions expecting a rubber reinforcing layer were the same in both of Reference Examples and Examples. Test methods are as follows.

### <vertical spring>

Each test tire was mounted on a standard rim (19×WM2.15), inflated to an internal pressure (80 kPa), and vertically loaded (2 kN), and a tread portion of the test tire was contacted to a flat surface. Quantity of vertical deflection was measured, and a vertical spring constant was calculated by dividing the above-mentioned load (2 kN) by the vertical deflection. The results were indicated by an index based on the vertical spring constant of Reference Example 1 being 100. The larger the index, the larger the vertical spring constant.

### <Field performance>

The above-mentioned assembly of the ti re and the rim were attached to a rear wheel of a 450cc motorcycle for motocross, and the motorcycle ran on a motocross course. A test driver evaluated sensuously the acceleration after jumping and landing and the road following performance at the time of flat off-road running. The results was indicated by a rank based on Reference Example 1 being 100, respectively. The higher the value, the better the field performance.

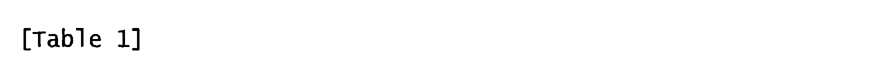

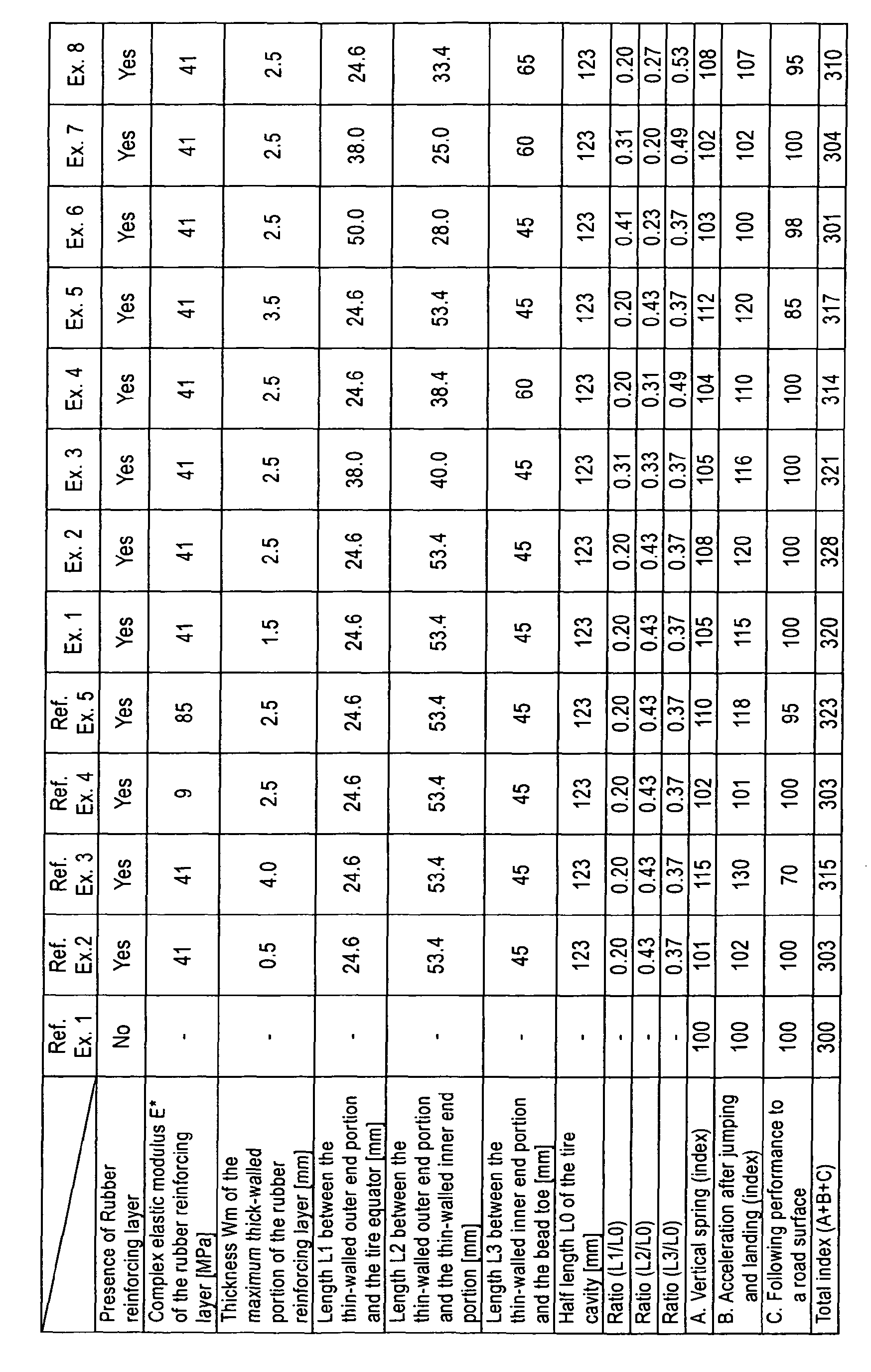

The test results confirmed that the ti res according to Examples had the significantly improved acceleration after jumping and landing without deteriorating the road following performance.

## Claims

1. A pneumatic tire for motocross comprising a troidal carcass extending from a tread portion to bead portions
through sidewall portions, and
an inner liner rubber disposed on an inner side of this carcass,
**characterized in that**
the pneumatic tire comprises a pair of rubber reinforcing layers attached to an interior surface of said inner liner rubber and extending in the circumferential direction of the tire in shoulder regions in both sides of the tire equator;
said rubber reinforcing layer is substantially crescent in cross section reducing gradually in thickness outwardly and inwardly in the radial direction of the tire from a maxi mum thick-walled portion having a maximum thickness wm of 1.0 to 3.5 mm; and
said rubber reinforcing layer has a complex elastic modulus E* of 10 to 80 MPa.

2. The pneumati c ti re for motoc ross as set forth in claim 1, wherein said rubber reinforcing layer comprises a thin-walled outer end
portion having a third part of said maximum thickness Wm and situated outside in the radial direction of the tire more than said maximum thick-walled portion; and
a length L1 between the thin-walled outer end portion and the tire equator surface along the interior surface of the inner liner rubber is 0.10 to 0.34 times a half length L0 of a tire cavity between the tire equator surface and a bead toe along the interior surface of inner liner rubber.

3. The pneumatic tire for motocross as set forth in claim 1 or 2, wherein
said rubber reinforcing layer has a thin-walled inner end portion having a thi rd part of said maximum thickness Wm and situated inside in the radial direction of the tire more than said maximum thick-walled portion; and
a length L3 between the thin-walled inner end portion and the bead toe along the interior surface of inner liner rubber is 0.10 to 0.50 times the half length L0 of the tire cavity between the tire equator surface and the bead toe along the interior surface of the inner liner rubber.

4. The pneumatic tire for motocross as set forth in any one of claims 1 to 3, wherein
said rubber reinforcing layer has the thin-walled outer end portion and the thin-walled inner end portion, each having a third part of said maximum thickness wm and situated outside and inside in the radial direction of the tire more than said maximum thick-walled portion; and
a length L2 of the rubber reinforcing layer between said thin-walled outer end portion and said thin-walled inner end portion along the interior surface of the inner liner rubber is 0.25 to 0.67 times the half length L0 of the tire cavity between the tire equator surface and the bead toe along the interior surface of the inner liner rubber.
